# EUROPEAN PATENT APPLICATION

(11) **EP 4 694 379 A1**
(43) Date of publication of application: **11.02.2026**
(21) Application number: 24806435.4
(22) Date of filing: 09.05.2024
(51) Int. Cl.: H04W 52/02

(54) **COMMUNICATION METHOD AND COMMUNICATION APPARATUS**

(30) Priority: 12.05.2023 CN 202310540775
(71) Applicant: Huawei Technologies Co., Ltd., Shenzhen, Guangdong 518129 (CN)
(72) Inventor: XUE, Yifan, Shenzhen, Guangdong 518129 (CN); MADIER, Louis, Shenzhen, Guangdong 518129 (CN); KUANG, Yiru, Shenzhen, Guangdong 518129 (CN); XUE, Lixia, Shenzhen, Guangdong 518129 (CN)
(74) Representative: Pfenning, Meinig & Partner mbB
(86) International application number: PCT/CN2024/091849
(87) International publication number: WO 2024/235083

(57) **Abstract**

This application provides a communication method and a communication apparatus. The method provides a solution of how a terminal device performs a discontinuous monitoring behavior on a low-power wake-up signal. Specifically, the terminal device receives, from a network device (which may be any one of devices such as a core network device, a base station corresponding to a last serving cell of the terminal device, and a base station corresponding to a current serving cell of the terminal device), configuration information used to configure a monitoring periodicity of the low-power wake-up signal, and determines, based on the configuration information, the monitoring periodicity of the low-power wake-up signal. The low-power wake-up signal is used to wake up the terminal device, and the terminal device may perform the discontinuous monitoring behavior on the low-power wake-up signal based on the monitoring periodicity, to reduce power consumption.

## Description

This application claims priority to Chinese Patent Application No. 202310540775.7, filed with the China National Intellectual Property Administration on May 12, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A terminal device may receive a wake-up signal through a separate low-power small circuit, for example, a wake-up receiver (wake-up receiver, WUR), and a main receiver may be in a sleep state. After the terminal device detects the wake-up signal via the WUR, the terminal device triggers wake-up of the main receiver. After the main receiver is woken up, the terminal device performs, via the main receiver, a paging (paging) receiving process, for example, receiving a paging message.

Currently, there are two types of behaviors of monitoring signal (for example, the wake-up signal) used to wake up the terminal device: continuous monitoring and discontinuous monitoring. In comparison with continuous monitoring, discontinuous monitoring can reduce power consumption of the terminal device. However, how to enable the terminal device to perform discontinuous monitoring on the signal used to wake up the terminal device is an urgent technical problem to be resolved currently.

### SUMMARY

This application provides a communication method and a communication apparatus, to support a terminal device in performing a discontinuous monitoring behavior on a signal used to wake up the terminal device.

According to a first aspect, a communication method is provided, including: A terminal device receives first configuration information from a first network device, where the first configuration information is used to configure a monitoring periodicity of a first signal. The terminal device determines the monitoring periodicity of the first signal based on the first configuration information, where the first signal is used to wake up the terminal device.

Specifically, the terminal device may obtain, from a network device, configuration information used to configure the monitoring periodicity of the first signal, and determine the monitoring periodicity of the first signal based on the configuration information. In this way, the terminal device can perform a discontinuous monitoring behavior on a signal used to wake up the terminal device.

According to a second aspect, a communication method is provided, including: A terminal device determines switching time of the terminal device and a latency requirement of the terminal device, where the switching time is duration between receiving a first signal by the terminal device and being capable of receiving paging information by the terminal device, or the switching time is duration between receiving the first signal by the terminal device and being capable of initiating access by the terminal device. The terminal device determines a monitoring periodicity of the first signal based on the switching time and the latency requirement, where the first signal is used to wake up the terminal device.

Specifically, the terminal device may determine the monitoring periodicity of the first signal of the terminal device based on a known parameter of the terminal device, for example, the switching time of the terminal device and the latency requirement of the terminal device, and monitor the first signal based on the monitoring periodicity of the first signal. In this way, a discontinuous monitoring behavior can be performed on a signal used to wake up the terminal device. In addition, the foregoing solution does not involve interaction between the terminal device and a network device. This can effectively reduce signaling overheads.

With reference to the solution according to any one of the first aspect and the second aspect, the method further includes: The terminal device monitors the first signal based on the monitoring periodicity of the first signal.

When a value of the monitoring periodicity of the first signal is 0, the terminal device performs a continuous monitoring behavior on the first signal. When the value of the monitoring periodicity of the first signal is not 0, the terminal device performs the discontinuous monitoring behavior on the first signal.

With reference to the solution according to any one of the first aspect and the second aspect, the method further includes: The terminal device receives second configuration information from a second network device, where the second configuration information is used to configure a periodicity of a sending occasion of the first signal.

In this way, the second network device can control frequency of sending the first signal, to control resource overheads of the first signal.

With reference to the solution according to any one of the first aspect and the second aspect, the method further includes: The terminal device monitors first paging information on a paging occasion, where the periodicity of the sending occasion of the first signal is greater than the monitoring periodicity of the first signal.

Specifically, when the terminal device determines that the periodicity of the sending occasion of the first signal is greater than the monitoring periodicity of the first signal, the terminal device may choose to give up monitoring the first signal, and choose to monitor the paging information on the paging occasion. This helps ensure the latency requirement of the terminal device.

With reference to the solution according to any one of the first aspect and the second aspect, the method further includes: The terminal device sends the switching time of the terminal device to the first network device.

In this way, the first network device can determine and configure the monitoring periodicity of the first signal for the terminal device.

With reference to the solution according to any one of the first aspect and the second aspect, the method further includes: The terminal device receives, from the first network device, at least one of the following: monitoring duration of the first signal and a monitoring offset of the first signal.

In this way, the terminal device can determine a time domain position and a time length that are for monitoring the first signal.

With reference to the solution according to any one of the first aspect and the second aspect, the method further includes: The terminal device receives second paging information from the second network device, where a time interval between sending time of the second paging information and sending time of the first signal is greater than or equal to the switching time of the terminal device.

In this way, the terminal device can receive the paging information as soon as possible after the terminal device is woken up, to reduce an overall processing latency of the terminal device.

With reference to the solution according to any one of the first aspect and the second aspect, the method further includes: The terminal device sends the latency requirement of the terminal device to the first network device.

In this way, the first network device can determine and configure the monitoring periodicity of the first signal for the terminal device.

With reference to the solution according to any one of the first aspect and the second aspect, the first network device includes any one of the following: a base station corresponding to a last serving cell of the terminal device, a core network device, or a base station corresponding to a current serving cell of the terminal device.

With reference to the solution according to any one of the first aspect and the second aspect, the first configuration information includes a correspondence between a type of the terminal device and the monitoring periodicity of the first signal, and that the terminal device determines the monitoring periodicity of the first signal based on the first configuration information includes: The terminal device determines the monitoring periodicity of the first signal based on the type of the terminal device and the first configuration information.

In this way, the first network device does not need to configure different monitoring periodicities of first signals for different terminal devices, but the terminal device determines the monitoring periodicity of the first signal based on the type of the terminal device. This can reduce signaling overheads of the first configuration information.

With reference to the solution according to any one of the first aspect and the second aspect, the second network device includes the base station corresponding to the current serving cell of the terminal device.

According to a third aspect, a communication method is provided, including: A second network device receives a monitoring periodicity of a first signal from a first network device. The second network device sends the first signal to a terminal device based on the monitoring periodicity of the first signal, where the first signal is used to wake up the terminal device. The second network device includes a base station corresponding to a current serving cell of the terminal device, and the first network device includes a core network device or a base station corresponding to a last serving cell of the terminal device.

According to a fourth aspect, a communication method is provided, including: A second network device receives first information from a first network device, where the first information includes switching time of a terminal device and a latency requirement of the terminal device, the first information includes the switching time of the terminal device and a specific discontinuous reception cycle of the terminal device, or the first information includes a type of the terminal device, where the type of the terminal device has an association relationship with switching time and a latency requirement. The second network device determines a monitoring periodicity of a first signal based on the first information, where the first signal is used to wake up the terminal device. The switching time is duration between receiving the first signal by the terminal device and being capable of receiving paging information by the terminal device, or the switching time is duration between receiving the first signal by the terminal device and being capable of initiating access by the terminal device. The second network device includes a base station corresponding to a current serving cell of the terminal device, and the first network device includes a core network device or a base station corresponding to a last serving cell of the terminal device.

With reference to the solution according to any one of the third aspect and the fourth aspect, the method further includes: The second network device sends the monitoring periodicity of the first signal to the terminal device.

With reference to the solution according to any one of the third aspect and the fourth aspect, the method further includes: The second network device sends configuration information to the terminal device, where the configuration information is used to configure a periodicity of a sending occasion of the first signal.

With reference to the solution according to any one of the third aspect and the fourth aspect, the method further includes: The second network device sends second paging information to the terminal device, where a time interval between sending time of the second paging information and sending time of the first signal is greater than or equal to the switching time.

With reference to the solution according to any one of the third aspect and the fourth aspect, the method further includes: The second network device sends first paging information to the terminal device on a paging occasion, where the first paging information is earlier than the second paging information. The periodicity of the sending occasion of the first signal is greater than the monitoring periodicity of the first signal.

With reference to the solution according to any one of the third aspect and the fourth aspect, the method further includes: The second network device sends, to the terminal device, at least one of the following: monitoring duration of the first signal and a monitoring offset of the first signal.

According to a fifth aspect, a communication method is provided, including: A first network device determines a monitoring periodicity of a first signal, where the first signal is used to wake up a terminal device. The first network device sends the monitoring periodicity of the first signal to at least one of the terminal device and a second network device. The second network device includes a base station corresponding to a current serving cell of the terminal device, and the first network device includes a core network device or a base station corresponding to a last serving cell of the terminal device.

In a possible implementation, the method further includes: The first network device receives switching time from the terminal device, where the switching time is duration between receiving the first signal by the terminal device and being capable of receiving paging information by the terminal device, or the switching time is duration between receiving the first signal by the terminal device and being capable of initiating access by the terminal device.

In a possible implementation, the method includes: The first network device receives a latency requirement from the terminal device.

In a possible implementation, the method further includes: The first network device determines the monitoring periodicity of the first signal based on the switching time and the latency requirement.

In a possible implementation, the method further includes: The first network device sends the switching time to the second network device.

In a possible implementation, the method further includes: The first network device sends the latency requirement to the second network device.

With reference to the solution according to any one of the first aspect to the fifth aspect, a value of the monitoring periodicity of the first signal belongs to a monitoring periodicity value set, and the monitoring periodicity value set is a predefined value set.

In this way, values of monitoring periodicities of different terminal devices are only a limited quantity of values, so that complexity of sending first signals by the second network device to different terminal devices can be reduced.

With reference to the solution according to any one of the first aspect to the fifth aspect, any two monitoring periodicities in the monitoring periodicity set satisfy an integer multiple relationship.

In this way, processing complexity of the second network device can be reduced when the second network device sends first signals to terminal devices that use different monitoring periodicities.

According to a sixth aspect, a communication apparatus is provided. The communication apparatus may be a terminal device, an apparatus (for example, a chip, a chip system, or a circuit) in the terminal device, or an apparatus that can be matched and used with the terminal device.

In a possible implementation, the communication apparatus includes a module or a unit that is in one-to-one correspondence with the method/operation/step/action described in any one of the first aspect and the second aspect. The module or the unit may be implemented by a hardware circuit, software, or a combination of the hardware circuit and the software.

In a possible implementation, the communication apparatus includes: a transceiver unit, configured to receive first configuration information from a first network device, where the first configuration information is used to configure a monitoring periodicity of a first signal; and a processing unit, configured to determine the monitoring periodicity of the first signal based on the first configuration information, where the first signal is used to wake up the communication apparatus.

The communication apparatus according to the sixth aspect may be further configured to perform the method according to any one of the first aspect.

According to a seventh aspect, a communication apparatus is provided. The communication apparatus may be a terminal device, an apparatus (for example, a chip, a chip system, or a circuit) in the terminal device, or an apparatus that can be matched and used with the terminal device.

In a possible implementation, the communication apparatus may include a module or a unit that is in one-to-one correspondence with the method/operation/step/action described in the second aspect. The module or the unit may be implemented by a hardware circuit, software, or a combination of the hardware circuit and the software.

In a possible implementation, the communication apparatus includes: a processing unit, configured to determine switching time of the communication apparatus and a latency requirement of the communication apparatus, where the switching time is duration between receiving a first signal by the communication apparatus and being capable of receiving paging information by the communication apparatus, or the switching time is duration between receiving the first signal by the communication apparatus and being capable of initiating access by the communication apparatus. The processing unit is configured to determine a monitoring periodicity of the first signal based on the switching time and the latency requirement, where the first signal is used to wake up the communication apparatus.

The communication apparatus according to the seventh aspect may be further configured to perform the method according to any one of the second aspect.

According to an eighth aspect, a communication apparatus is provided. The communication apparatus may be a second network device, an apparatus (for example, a chip, a chip system, or a circuit) in the second network device, or an apparatus that can be matched and used with the second network device.

In a possible implementation, the communication apparatus may include a module or a unit that is in one-to-one correspondence with the method/operation/step/action described in the third aspect. The module or the unit may be implemented by a hardware circuit, software, or a combination of the hardware circuit and the software.

In a possible implementation, the communication apparatus includes: a transceiver unit, configured to receive a monitoring periodicity of a first signal from a first network device. The transceiver unit is further configured to send the first signal to a terminal device based on the monitoring periodicity of the first signal, where the first signal is used to wake up the terminal device. The communication apparatus includes a base station corresponding to a current serving cell of the terminal device, and the first network device includes a core network device or a base station corresponding to a last serving cell of the terminal device.

The communication apparatus according to the eighth aspect may be further configured to perform the method according to any one of the third aspect.

According to a ninth aspect, a communication apparatus is provided. The communication apparatus may be a second network device, an apparatus (for example, a chip, a chip system, or a circuit) in the second network device, or an apparatus that can be matched and used with the second network device.

In a possible implementation, the communication apparatus may include a module or a unit that is in one-to-one correspondence with the method/operation/step/action described in the fourth aspect. The module or the unit may be implemented by a hardware circuit, software, or a combination of the hardware circuit and the software.

In a possible implementation, the communication apparatus includes: a transceiver unit, configured to receive first information from a first network device, where the first information includes switching time of a terminal device and a latency requirement of the terminal device, the first information includes the switching time of the terminal device and a specific discontinuous reception cycle of the terminal device, or the first information includes a type of the terminal device, where the type of the terminal device has an association relationship with switching time and a latency requirement; and a processing unit, configured to determine a monitoring periodicity of a first signal based on the first information, where the first signal is used to wake up the terminal device. The switching time is duration between receiving the first signal by the terminal device and being capable of receiving paging information by the terminal device, or the switching time is duration between receiving the first signal by the terminal device and being capable of initiating access by the terminal device. The communication apparatus includes a base station corresponding to a current serving cell of the terminal device, and the first network device includes a core network device or a base station corresponding to a last serving cell of the terminal device.

The communication apparatus according to the ninth aspect may be further configured to perform the method according to any one of the fourth aspect.

According to a tenth aspect, a communication apparatus is provided. The communication apparatus may be a first network device, an apparatus (for example, a chip, a chip system, or a circuit) in the first network device, or an apparatus that can be matched and used with the first network device.

In a possible implementation, the communication apparatus may include a module or a unit that is in one-to-one correspondence with the method/operation/step/action described in the fifth aspect. The module or the unit may be implemented by a hardware circuit, software, or a combination of the hardware circuit and the software.

In a possible implementation, the communication apparatus includes: a processing unit, configured to determine a monitoring periodicity of a first signal, where the first signal is used to wake up a terminal device; and a transceiver unit, configured to send the monitoring periodicity of the first signal to at least one of the terminal device and a second network device, where the second network device includes a base station corresponding to a current serving cell of the terminal device, and the communication apparatus includes a core network device or a base station corresponding to a last serving cell of the terminal device.

The communication apparatus according to the tenth aspect may be further configured to perform the method according to any one of the fifth aspect.

According to an eleventh aspect, a communication apparatus is provided, including a processor, where the processor is configured to: execute a computer program or instructions, or use a logic circuit to: enable the communication apparatus to perform the method according to any one of the first aspect and the possible implementations of the first aspect; enable the communication apparatus to perform the method according to any one of the second aspect and the possible implementations of the second aspect; enable the communication apparatus to perform the method according to any one of the third aspect and the possible implementations of the third aspect; enable the communication apparatus to perform the method according to any one of the fourth aspect and the possible implementations of the fourth aspect; or enable the communication apparatus to perform the method according to any one of the fifth aspect and the possible implementations of the fifth aspect.

In a possible implementation, the communication apparatus further includes a memory. The memory is configured to store the computer program or the instructions.

In a possible implementation, the communication apparatus further includes a communication interface. The communication interface is configured to input and/or output a signal.

According to a twelfth aspect, a communication apparatus is provided, including a logic circuit and an input/output interface, where the input/output interface is configured to input and/or output a signal; and the logic circuit is configured to perform the method according to any one of the first aspect and the possible implementations of the first aspect; the logic circuit is configured to perform the method according to any one of the second aspect and the possible implementations of the second aspect; the logic circuit is configured to perform the method according to any one of the third aspect and the possible implementations of the third aspect; the logic circuit is configured to perform the method according to any one of the fourth aspect and the possible implementations of the fourth aspect; or the logic circuit is configured to perform the method according to any one of the fifth aspect and the possible implementations of the fifth aspect.

According to a thirteenth aspect, a computer-readable storage medium is provided, where the computer-readable storage medium stores a computer program or instructions; and when the computer program or the instructions are run on a computer, the method according to any one of the first aspect and the possible implementations of the first aspect is performed; the method according to any one of the second aspect and the possible implementations of the second aspect is performed; the method according to any one of the third aspect and the possible implementations of the third aspect is performed; the method according to any one of the fourth aspect and the possible implementations of the fourth aspect is performed; or the method according to any one of the fifth aspect and the possible implementations of the fifth aspect is performed.

According to a fourteenth aspect, a computer program product is provided, including instructions, where when the instructions are run on a computer, the method according to any one of the first aspect and the possible implementations of the first aspect is performed; the method according to any one of the second aspect and the possible implementations of the second aspect is performed; the method according to any one of the third aspect and the possible implementations of the third aspect is performed; the method according to any one of the fourth aspect and the possible implementations of the fourth aspect is performed; or the method according to any one of the fifth aspect and the possible implementations of the fifth aspect is performed.

Descriptions of beneficial effects of the third aspect to the fourteenth aspect may correspond to the descriptions of beneficial effects of the first aspect and the second aspect.

### BRIEF DESCRIPTION OF DRAWINGS

FIG. 1 is a diagram of a communication system 100 to which an embodiment of this application is applicable;
FIG. 2 is a diagram in which a terminal device 120 receives a wake-up signal via a second module;
FIG. 3 is a diagram of a waveform of a wake-up signal during OOK modulation;
FIG. 4 is a diagram of a waveform of a wake-up signal during FSK modulation;
FIG. 5 is a schematic interaction flowchart of a communication method 500 according to an embodiment of this application;
FIG. 6 is a schematic interaction flowchart of a communication method 600 according to an embodiment of this application;
FIG. 7 is a schematic interaction flowchart of a communication method 700 according to an embodiment of this application;
FIG. 8 is a schematic interaction flowchart of a communication method 800 according to an embodiment of this application;
FIG. 9 is a diagram of a periodicity of a sending occasion of a wake-up signal according to an embodiment of this application;
FIG. 10 is a diagram of sending time of paging information according to an embodiment of this application;
FIG. 11 is a block diagram of a communication apparatus 1100 according to an embodiment of this application;
FIG. 12 is a block diagram of a communication apparatus 1200 according to an embodiment of this application;
FIG. 13 is a block diagram of a communication apparatus 1300 according to an embodiment of this application;
FIG. 14 is a block diagram of a communication apparatus 1400 according to an embodiment of this application; and
FIG. 15 is a block diagram of a communication apparatus 1500 according to an embodiment of this application.

### DESCRIPTION OF EMBODIMENTS

For ease of understanding of embodiments of this application, the following points are described first.
1. In this application, unless otherwise specified, "a plurality of" means two or more.
2. In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers involved in this application do not mean an execution sequence. The execution sequence of processes should be determined based on functions and internal logic of the processes. For example, terms "first", "second", "third", "fourth", various other term numerals, and the like (if existent) in the specification, claims, and accompanying drawings of this application are intended to distinguish between similar objects, but do not necessarily describe a specific order or sequence. The data termed in such a way is interchangeable in a proper circumstance so that embodiments described herein can be implemented in another order than the order illustrated or described herein.
   In addition, any embodiment or design scheme described as an "example" or "for example" in this application should not be explained as being more preferred or having more advantages than another embodiment or design scheme. Exactly, use of the terms such as the "example" or "for example" is intended to present a related concept in a specific manner for ease of understanding.
4. Terms "include" and "have" and any other variants are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.
5. In this application, "indicate" may be understood as "enable", and the "enable" may include direct enabling and indirect enabling. When a piece of information is described as being used to enable A, the information may directly enable A or indirectly enable A, and it does not mean that the information definitely carries A.
   Information enabled by information is referred to as to-be-enabled information. In a specific implementation process, the to-be-enabled information may be enabled in many manners, for example but not limited to, directly enabling the to-be-enabled information, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and another part of the to-be-enabled information is known or agreed in advance. For example, specific information may be enabled through a pre-agreed (for example, specified in a protocol) sequence of all pieces of information, to reduce enabling overheads to some extent. In addition, a common part of all pieces of information may be identified and enabled in a unified manner, to reduce enabling overheads caused by enabling the same information separately.
6. In this application, "pre-configuration" may include pre-definition, for example, protocol definition. The "pre-definition" may be implemented by pre-storing, in a device (for example, including network elements), corresponding code, a corresponding table, or other related information that may be used for indication. A specific implementation thereof is not limited in this application.
7. "Store" or "storing" involved in this application may refer to storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. A "protocol" involved in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.
9. Arrows or blocks shown by dashed lines in diagrams of the accompanying drawings in the specification of this application represent optional steps or modules.
10. In this application, unless otherwise specified, "/" indicates an "or" relationship between associated objects. For example, A/B may indicate A or B. In this application, "and/or" describes only an association relationship for describing associated objects and indicates that three relationships may exist. For example, A and/or B may indicate the following three cases: Only A exists, both A and B exist, and only B exists, where A and B may be singular or plural.

First, a communication system to which embodiments of this application are applicable is described.

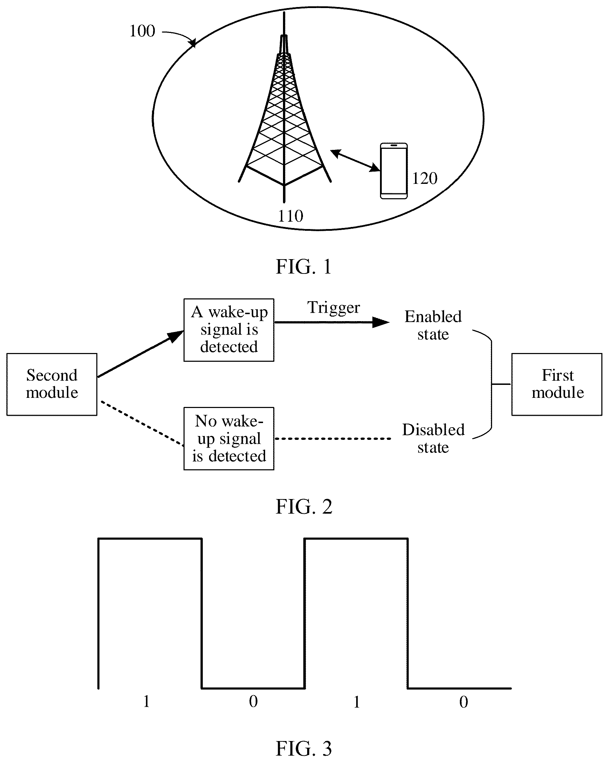

FIG. 1 is a diagram of a communication system 100 to which an embodiment of this application is applicable. As shown in FIG. 1, the communication system 100 includes a network device 110 and a terminal device 120.

The terminal device 120 is specifically a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), customer-premises equipment (customer premises equipment, CPE), a smart point of sale (point of sale, POS) machine, a handheld device having a wireless communication function, a computing device or another processing device connected to a wireless modem, a vehicle-mounted device, a communication device mounted on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device 120 may be a terminal device, or may be an apparatus that can support the terminal device in implementing the function, for example, a chip system. The apparatus may be mounted in the terminal device or used in a manner of matching the terminal device. In this application, the chip system may include a chip, or may include a chip and another discrete component.

In addition, the network device 110 is a device having a wireless transceiver function, and is configured to communicate with the terminal device 120. The network device 110 may be a node in a radio access network (radio access network, RAN), may be referred to as a base station, or may be referred to as a RAN node. The network device 110 may be an evolved NodeB (evolved NodeB, eNB or eNodeB) in LTE, a base station in a 5G network, for example, a gNodeB (gNB), a base station in a public land mobile network (public land mobile network, PLMN) evolved after 5G, a broadband network gateway (broadband network gateway, BNG), an aggregation switch, an access device in the 3rd generation partnership project (the 3rd generation partnership project, 3GPP), or the like.

The RAN may be configured as a RAN, an open radio access network (open radio access network, O-RAN), a cloud radio access network (cloud radio access network, C-RAN), or the like defined in the 3GPP protocol. The network device 110 may further include base stations in various forms, for example, a macro base station, a micro base station (also referred to as a small cell), a relay station, a transmitting and receiving point (transmitting and receiving point, TRP), a transmitting point (transmitting point, TP), a mobile switching center, a device that takes on a base station function in device-to-device (device-to-device, D2D), vehicle-to-everything (vehicle-to-everything, V2X), or machine-to-machine (machine-to-machine, M2M) communication, and a network device in a non-terrestrial network (non-terrestrial network, NTN). This is not specifically limited.

The network device 110 may further include a network element or module that implements some functions of a base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between a DU and an RU in an O-RAN system, or the like. This is not limited.

A communication apparatus configured to implement a function of the network device 110 may be a network device, or may be an apparatus that can support the network device in implementing the function, for example, a chip system. The apparatus may be mounted in the network device or used in a manner of matching the network device. In this embodiment of this application, the chip system may include a chip, or may include a chip and another discrete component.

It should be noted that the communication system 100 may alternatively be the following systems: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, or an NTN system like an inter-satellite communication system or a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The communication system 100 may alternatively be a terrestrial cellular communication system, a high altitude platform station (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

Then, technical content involved in embodiments of this application is briefly described.

Regardless of whether the terminal device 120 performs a paging receiving procedure in an idle (idle) state/inactive (inactive) state or receives data in a connected state, the terminal device 120 uses a same receiving module (a receiver, or a receiving circuit). In this application, a module that completes these functions (or performs related steps) may be referred to as a first module. The first module is merely named for differentiation, and a specific name of the first module does not limit the protection scope of this application. For example, the first module may alternatively be a first circuit or a main circuit. For ease of description, the first module is uniformly used for description below.

A process in which the terminal device 120 receives a signal via the first module may be referred to as a process in which transmission of the signal is performed on a link (which may be denoted as a first link for differentiation). The first link represents a connection relationship between the terminal device 120 and the network device 110, and is a logical concept rather than a physical entity. The first link may also be referred to as a main link. For ease of description, the first link is uniformly used for description below.

Power consumption of performing a paging receiving procedure by the terminal device 120 via the first module is high. For example, the terminal device 120 first uses a receiving module of the first module to receive a downlink signal, then performs blind detection on a physical downlink control channel (physical downlink control channel, PDCCH), and finally performs decoding and the like on a received physical downlink shared channel (physical downlink shared channel, PDSCH). All these cause high power consumptions. Because a circuit structure of the first module is complex, reference power consumption of the first module during running is also high.

To reduce high power consumption caused when the terminal device 120 performs the paging receiving procedure via the first module, the terminal device 120 may use a separate low-power small circuit to receive a wake-up signal (wake-up signal/radio, WUS/WUR). The wake-up signal indicates paging-related information, and the paging-related information may include a paged terminal device or a paged terminal device group. The low-power small circuit may be implemented by using a separate small circuit with a simple structure or a chip, so that power consumption of the low-power small circuit is low.

In a possible implementation, the low-power small circuit may be alternatively a wake-up receiver (wake-up receiver, WUR), a wake-up circuit, a low-power circuit, or the like. A specific name of the low-power small circuit is not limited in this application. In this application, the low-power small circuit may be referred to as a second module. It may be understood that the second module is merely named for differentiation, and a specific name of the second module does not limit the protection scope of this application. For example, the second module may alternatively be a second circuit or a wake-up circuit. For ease of description, the low-power small circuit is uniformly described as the second module below.

Similarly, a process in which the terminal device 120 receives a signal via the second module may be referred to as a process in which transmission of the signal is performed on a link (which is denoted as a second link for differentiation). The second link represents a connection relationship between the terminal device 120 and the network device 110, and is a logical concept rather than a physical entity. The wake-up signal is merely an example name, and a name thereof is not limited in this application.

FIG. 2 is a diagram in which a terminal device 120 receives a wake-up signal via a second module. As shown in FIG. 2, the terminal device 120 detects the wake-up signal via the second module, and the wake-up signal may carry paging-related indication information. The terminal device 120 receives a signal via the second module. If the terminal device 120 detects no wake-up signal associated with the terminal device 120, the terminal device 120 continues receiving the signal via the second module, and a first module may be in a disabled state (or a sleep state). If the terminal device 120 detects a wake-up signal associated with the terminal device 120, the terminal device 120 triggers wake-up of a first module, that is, makes the first module be in/switched to an enabled state (or referred to as an operating state or an active state). After the first module is enabled, the terminal device 120 performs a paging receiving procedure, for example, receives a paging PDCCH, and receives a paging PDSCH after the paging PDCCH is detected on a corresponding paging occasion (paging occasion, PO). Alternatively, after the first module is enabled, the terminal device 120 performs a PDCCH monitoring procedure. A monitored PDCCH may be a PDCCH used to schedule data transmission, for example, a PDCCH carrying any one of the following downlink control information (downlink control information, DCI): DCI format 0_0, DCI format 0_1, DCI format 0_2, DCI format 1_0, DCI format 1_1, DCI format 1_2, and the like.

In an example, to ensure a power consumption gain, the wake-up signal may be modulated by using on-off keying (on-off keying, OOK) or frequency-shift keying (frequency-shift keying, FSK), and a corresponding wake-up circuit may receive the wake-up signal by using an envelope detection method.

FIG. 3 is a diagram of a waveform of a wake-up signal during OOK modulation. As shown in FIG. 3, when the OOK modulation is used for the wake-up signal, each bit (that is, an encoded bit) corresponds to one symbol (symbol). Similarly, the symbol may also be referred to as a chip (chip), or may be termed differently. This is not limited. When the bit is 1, a signal is sent within duration of the symbol (to be specific, signal transmit power is not 0 within the duration of the symbol). When the bit is 0, no signal is sent within duration of the symbol (to be specific, signal transmit power is 0 within the duration of the symbol). The waveform shown in FIG. 3 represents bits 1010.

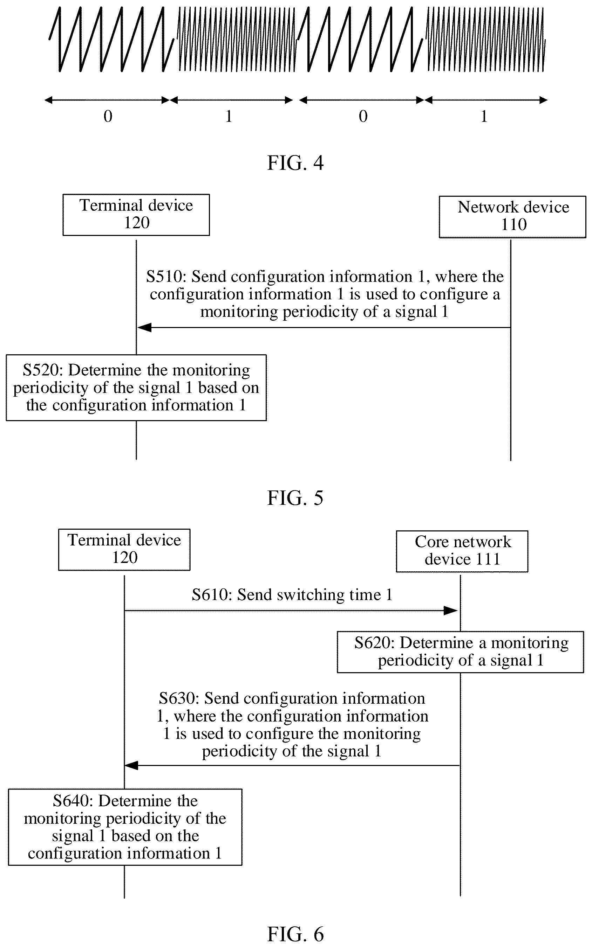

FIG. 4 is a diagram of a waveform of a wake-up signal during FSK modulation. As shown in FIG. 4, when the FSK modulation is used for the wake-up signal, different frequency resources are used for different information. For example, 2FSK carries 1-bit information. When an information bit is 0, information is sent on a frequency resource f0, and no information is sent on a frequency resource f1; or when an information bit is 1, information is sent on a frequency resource f1, and no information is sent on a frequency resource f0. It is assumed that f0<f1, and a waveform of an FSK signal whose information is 0101 is shown in FIG. 4. In a 1^{st} symbol and a 3^{rd} symbol, a frequency of the signal is lower, and in a 2^{nd} symbol and a 4^{th} symbol, a frequency of the signal is higher. When demodulating the signal, a receive end may compare powers on f0 and f1 to determine whether sent information is 0 or 1.

Currently, there are two types of behaviors of monitoring a signal (for example, a wake-up signal) used to wake up a terminal device: continuous monitoring (continuous monitoring) and discontinuous monitoring (duty-cycle monitoring) (which may also be a periodic monitoring or a duty-cycle monitoring. Continuous monitoring means that the second module always remains enabled and monitors the wake-up signal at all possible positions for transmission of the wake-up signal. Discontinuous monitoring means that the second module is in an enabled state only in some periods of time, and monitors the wake-up signal at some possible positions for transmission of the wake-up signal.

In comparison with continuous monitoring, discontinuous monitoring can reduce power consumption of the terminal device. However, how to enable the terminal device to perform the discontinuous monitoring behavior on the wake-up signal is an urgent technical problem to be resolved currently.

In view of this, this application provides a communication method and a communication apparatus, to support the terminal device in performing the discontinuous monitoring behavior on the signal used to wake up the terminal device.

Then, the communication method in embodiments of this application is described.

FIG. 5 is a schematic interaction flowchart of a communication method 500 according to an embodiment of this application. The method 500 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. The method 500 includes the following steps.

S510: The network device 110 (for example, a first network device) sends configuration information 1 (for example, first configuration information) to the terminal device 120, where the configuration information 1 is used to configure a monitoring periodicity of a signal 1 (for example, a first signal).

Correspondingly, the terminal device 120 receives the configuration information 1 from the network device 110.

The network device 110 may be a core network device 111, a base station 112 corresponding to a last serving cell (last serving cell) of the terminal device 120, or a base station 113 corresponding to a current serving cell (current serving cell) of the terminal device 120. This is not limited. The current serving cell may also be referred to as a serving cell (serving cell) for short. The terminal device 120 receives the configuration information 1 via a first module. The last serving cell may be understood as a cell in which the terminal device 120 is switched from a connected state to an idle state or inactive state. The current serving cell may be understood as a cell on which the terminal device 120 currently camps. The current serving cell and the last serving cell may be a same cell, and the base station 112 and the base station 113 are a same base station.

The signal 1 can be used to wake up the terminal device 120. In an example, the signal 1 is the foregoing wake-up signal or a low-power (low-power, LP) wake-up signal. Provided that the signal 1 can implement a function used to wake up the terminal device 120, a specific name of the signal 1 is not limited in this application.

In a possible implementation, that the configuration information 1 is used to configure the monitoring periodicity of the signal 1 may be that the configuration information 1 includes the monitoring periodicity of the signal 1. Alternatively, the monitoring periodicity of the signal 1 may be a value of the monitoring periodicity of the signal 1.

In a possible implementation, the monitoring periodicity of the signal 1 belongs to a predefined monitoring periodicity set. In this way, values of monitoring periodicities of different terminal devices are only a limited quantity of values, so that complexity of sending signal 1s by the base station 113 to different terminal devices can be reduced.

In a possible implementation, any two monitoring periodicities in the monitoring periodicity set satisfy an integer multiple relationship (or satisfy a nesting relationship). In this way, processing complexity of the base station 113 can be reduced when the base station 113 sends signal 1s to terminal devices that use different monitoring periodicities.

For example, the monitoring periodicity set is {80 ms, 160 ms, 320 ms, 640 ms, 1280 ms, 2560 ms}. For another example, the monitoring periodicity set is {0 ms, 80 ms, 60 ms, 320 ms, 640 ms, 1280 ms, 2560 ms}. 0 ms is an optional value. When the monitoring periodicity of the signal 1 is configured to be 0 ms, the terminal device 120 monitors the signal 1 in a continuous monitoring manner. In conclusion, the monitoring periodicity that is of the signal 1 and that is configured by using the configuration information 1 is any value in the predefined monitoring periodicity set.

Different terminal devices may correspond to respective monitoring periodicities of signal 1s. For example, the terminal device 120 corresponds to 80 ms, and a terminal device 130 corresponds to 160 ms. In this way, the network device 110 may manage the monitoring periodicity of the signal 1, to satisfy requirements of different terminal devices for monitoring the signal 1s, for example, latency requirements of different terminal devices.

S520: The terminal device 120 determines the monitoring periodicity of the signal 1 based on the configuration information 1.

Specifically, the terminal device 120 determines the monitoring periodicity of the signal 1 based on the configuration information 1.

In conclusion, the terminal device 120 obtains, from the network device 110, the configuration information 1 used to configure the monitoring periodicity of the signal 1, and determines the monitoring periodicity of the signal 1 based on the configuration information 1. In this way, this application supports the terminal device in performing a discontinuous monitoring behavior on the signal 1. When the monitoring periodicity of the signal 1 is 0 ms, this application also supports the terminal device in performing a continuous monitoring behavior on the signal 1.

In the method 500, after the terminal device 120 determines the monitoring periodicity of the signal 1, the terminal device 120 does not necessarily monitor the signal 1 based on the monitoring periodicity of the signal 1. For example, when the terminal device 120 determines that a periodicity (which is configured and indicated by the base station 113) of a sending occasion of the signal 1 is greater than the monitoring periodicity of the signal 1, the terminal device 120 may choose to give up monitoring the signal 1, and monitor paging information on a PO. The PO is a time domain position that periodically appears and that is configured by the base station 113 to monitor the paging information. When the periodicity of the sending occasion of the signal 1 is greater than the monitoring periodicity of the signal 1, a latency requirement of the terminal device 120 for monitoring the signal 1 may not be satisfied, and the terminal device 120 may choose to give up monitoring the signal 1, and monitor the paging information on the PO. When the terminal device 120 determines that the periodicity of the sending occasion of the signal 1 is less than or equal to the monitoring periodicity of the signal 1, the terminal device 120 may monitor the signal 1 based on the monitoring periodicity of the signal 1. In this case, the periodicity of the sending occasion of the signal 1 may be a divisor of the monitoring periodicity of the signal 1, and the signal 1 is a signal associated with the terminal device 120. For example, the monitoring periodicity of the signal 1 associated with the terminal device 120 is 80 ms, and the periodicity of the sending occasion of the signal 1 may be 20 ms. In this case, for the base station 113, for every four sending occasions of the signal 1, one serves as a time domain position that can be used by the terminal device 120 to send the signal 1. Similarly, the periodicity of the sending occasion of the signal 1 may be a common divisor of different monitoring periodicities of the signal 1. Therefore, when any two monitoring periodicities in the monitoring periodicity set satisfy the integer multiple relationship, processing complexity of the network device can be reduced when the network device sends signal 1s to terminal devices that use different monitoring periodicities. Optionally, a value of the periodicity of the sending occasion of the signal 1 may be configured to be 0 ms. In this case, it means that sending occasions of the signal 1 are continuous.

The following further describes the method 500 in sequence from aspects such as that the network device 110 is the core network device 111, that the network device 110 is the base station 112, and that the network device 110 is the base station 113.

FIG. 6 is a schematic interaction flowchart of a communication method 600 according to an embodiment of this application. The method shown in FIG. 6 is described by using an example in which a network device 110 is a core network device 111. The method 600 includes the following steps.

S610: A terminal device 120 sends switching time 1 to the core network device 111.

Correspondingly, the core network device 111 receives the switching time 1 from the terminal device 120.

When the terminal device 120 is in a connected state, the terminal device 120 reports the switching time 1 to the core network device 111 by using non-access stratum (non-access stratum, NAS) signaling. For example, after the terminal device 120 is powered on, the terminal device 120 first switches to the connected state, and completes procedures such as registration. In the foregoing procedure, the terminal device 120 reports, to the core network device 111, related information (for example, registration request information) that carries the switching time 1.

Specifically, the switching time 1 may be duration (duration) or a time interval between receiving a signal 1 by the terminal device 120 and being capable of receiving paging information by the terminal device 120. Alternatively, the switching time 1 may be duration or a time interval between receiving the signal 1 by the terminal device 120 and being capable of initiating access by the terminal device 120. That the terminal device 120 is capable of receiving the paging information may be: The terminal device 120 has a capability of receiving the paging information. For example, a first module in the terminal device 120 has been enabled, downlink synchronization has been completed, and cell-related configuration information has been received. That the terminal device 120 is capable of initiating access may be: The terminal device 120 has a capability of initiating access. For example, a first module in the terminal device 120 has been enabled, downlink synchronization has been completed, and cell-related configuration information has been received.

In a possible implementation, the switching time 1 may further specifically include: ramp-up time (ramp-up time) of the first module, time (which is optional) of cell search and/or downlink synchronization after the first module is enabled, and time (which is optional) of receiving the cell-related configuration information after the first module is enabled.

Ramp-up time of a first module has an association relationship with a capability or a type of a terminal device. For example, ramp-up time of a first module in a terminal device is 400 ms, ramp-up time of a first module in a terminal device is 800 ms, or ramp-up time of a first module in a terminal device is several seconds. Generally, a more complex structure and more functions of the first module indicate longer ramp-up time of the first module. For example, ramp-up time of a first module in an internet of things (internet of things, IoT)-type terminal device may be shorter than ramp-up time of a first module in a mobile phone.

After the first module is enabled, the terminal device may need to perform procedures such as cell search and cell synchronization. For example, after the first module is enabled, the terminal device may need several synchronization signal and physical broadcast channel blocks (synchronization signal and physical broadcast channel blocks, SSBs) to complete downlink synchronization. When an SSB periodicity is 20 ms, the terminal device may need dozens of milliseconds or even hundreds of milliseconds to complete the procedures such as the cell synchronization.

After the first module is enabled, the terminal device may further need to perform procedures such as receiving cell configuration information. For example, after the first module is enabled, the terminal device may need to receive a SIB1 and the like, and the terminal device may need dozens of milliseconds or even hundreds of milliseconds to complete the procedures such as receiving the cell configuration information.

S620: The core network device 111 determines a monitoring periodicity of the signal 1.

Specifically, the core network device 111 may determine the monitoring periodicity of the signal 1 based on the switching time 1 and a latency requirement 1.

In a possible implementation, the latency requirement 1 may be determined by the core network device 111 based on a protocol data unit (protocol data unit, PDU) session (session) that has been established by the terminal device 120, and the terminal device 120 may not report the latency requirement 1.

In another possible implementation, the terminal device 120 sends the latency requirement 1 to the core network device 111. In this way, the core network device 111 can more accurately determine the latency requirement of the terminal device 120.

For example, the latency requirement 1 is 1s, and the switching time 1 is 600 ms. After a downlink service arrives at a base station 113, the base station 113 needs to send the signal 1 to the terminal device 120 within 400 ms, and the core network device 111 may select 320 ms or 160 ms as the monitoring periodicity of the signal 1.

S630: The core network device 111 sends configuration information 1 to the terminal device 120.

Correspondingly, the terminal device 120 receives the configuration information 1 from the core network device 111.

S640: The terminal device 120 determines the monitoring periodicity of the signal 1 based on the configuration information 1.

After the terminal device 120 receives the configuration information 1, the terminal device 120 determines the monitoring periodicity of the signal 1 based on the configuration information 1.

It should be noted that after determining the monitoring periodicity of the signal 1, the terminal device 120 does not necessarily monitor the signal 1 based on the monitoring periodicity of the signal 1. For details, refer to the descriptions of FIG. 5.

In conclusion, the core network device 111 determines the monitoring periodicity of the signal 1 based on the switching time 1 and the latency requirement 1. The terminal device 120 determines the monitoring periodicity of the signal 1 based on the configuration information 1, and performs a discontinuous monitoring behavior on the signal 1 based on the monitoring periodicity of the signal 1 (when the monitoring periodicity of the signal 1 is 0 ms, a continuous monitoring behavior is performed).

In the method 600, optionally, a type of a terminal device has an association relationship with, switching time, and a latency requirement. For example, different types of terminal devices may be mapped to different latency requirements and different switching time. The terminal device 120 may further report a type of the terminal device 120 to the core network device 111. For example, the type of the terminal device 120 is a type 1, the type 1 is associated with a latency requirement Z ms and switching time Y ms, and the monitoring periodicity of the signal 1 may be Z-Y ms. Further, the core network device 111 determines, based on the type of the terminal device 120, the switching time and the latency requirement associated with the terminal device 120, and further determines the monitoring periodicity applicable to the signal 1 associated with the terminal device 120. For example, types of terminal devices may include a reduced capability (reduced capability, RedCap) UE type and a non-RedCap UE type. The RedCap UE type may correspond to a wearable device, an IoT terminal, or the like, and the non-RedCap UE type may correspond to a mobile phone or the like. A latency requirement of the non-RedCap UE type is usually higher than that of the RedCap UE type. Alternatively, types of terminal device may include an extended reality (extended reality, XR) UE type or a non-XR UE type, and a latency requirement of the XR UE type is usually higher than a latency requirement of the non-XR UE type.

It may be understood that when the terminal device 120 reports the type of the terminal device to the core network device 111, the terminal device 120 may not report parameters such as the switching time 1 to the core network device 111.

In a possible implementation, the configuration information 1 may further include a correspondence between the type of the terminal device and the monitoring periodicity of the signal 1. For example, a type 1 of a terminal device is associated with a monitoring periodicity 1, and a type 2 of a terminal device is associated with a monitoring periodicity 2. The terminal device 120 may determine, based on the type of the terminal device 120 with reference to the configuration information 1, the monitoring periodicity of the signal 1 associated with the terminal device 120. In this way, the core network device 111 does not need to configure monitoring periodicities of signal 1s for different terminal devices, but a terminal device determines a monitoring periodicity of the signal 1 based on a type of the terminal device. This can reduce signaling overheads of the configuration information 1.

In the method 600, the core network device 111 may further send, to the terminal device 120, at least one of the following: monitoring duration of the signal 1 and a monitoring offset of the signal 1. The monitoring duration of the signal 1 is duration in which the terminal device 120 monitors the signal 1 each time. For example, the monitoring periodicity of the signal 1 is 320 ms, and the monitoring duration of the signal 1 is 20 ms. That is, the terminal device 120 monitors the signal 1 for duration of 20 ms within 320 ms. The monitoring offset of the signal 1 is used to determine a time position at which the terminal device 120 monitors the signal 1. Different terminal devices have different monitoring offsets, so that different terminal devices can monitor signal 1s at different time positions. Therefore, load balancing can be implemented, congestion of the signal 1s can be avoided, and a probability of a conflict when different terminal devices monitor the signal 1s can be reduced. In this way, the terminal device 120 may determine a time domain position and a time length that are for monitoring the signal 1.

It should be noted that, when the monitoring periodicity of the signal 1 corresponding to the terminal device 120 is the same as the monitoring duration of the signal 1, the terminal device 120 actually performs continuous monitoring instead of discontinuous monitoring on the signal 1.

In a possible implementation, the configuration information 1 may be further used to configure at least one of the following: the monitoring duration of the signal 1 and the monitoring offset of the signal 1. Alternatively, the core network device 111 may configure, for the terminal device 120 by using new information, at least one of the following: the monitoring duration of the signal 1 and the monitoring offset of the signal 1. This is not limited.

It should be noted that the method 600 mainly relates to content of interaction that may be performed between the terminal device 120 and the core network device 111 by using the NAS signaling, and the terminal device 120 is in the connected state.

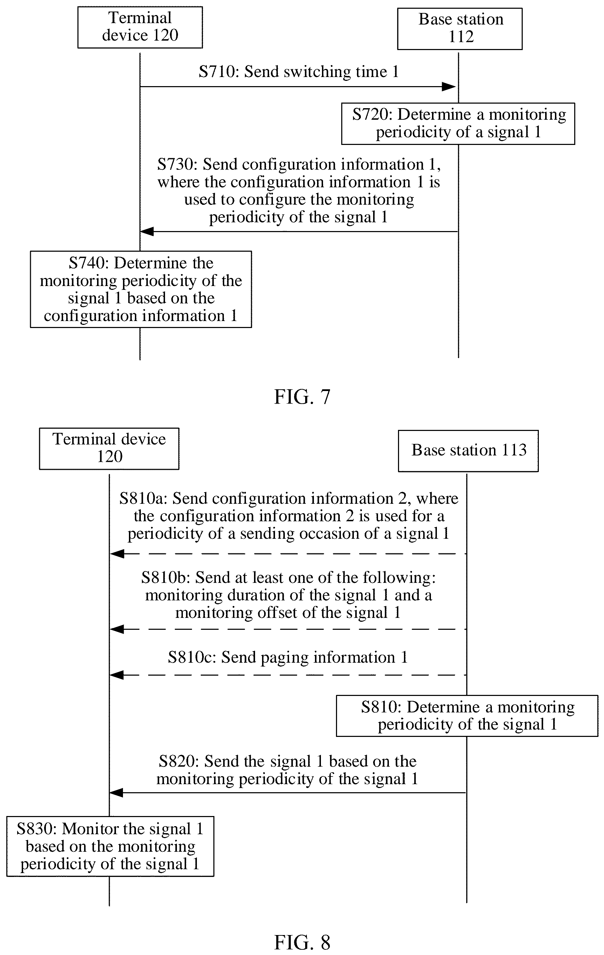

FIG. 7 is a schematic interaction flowchart of a communication method 700 according to an embodiment of this application. The method shown in FIG. 7 is described by using an example in which a network device 110 is a base station 112. The method 700 includes the following steps.

S710: A terminal device 120 sends switching time 1 to the base station 112.

Correspondingly, the base station 112 receives the switching time 1 from the terminal device 120.

When the terminal device 120 is in a connected state, the terminal device 120 reports the switching time 1 to the base station 112 by using radio resource control (radio resource control, RRC) signaling. For example, the terminal device 120 reports the switching time 1 to the base station 112 by using UE capability information (UE capability information) or UE assistance information (UE assistance information). For descriptions of the switching time, refer to FIG. 5.

S720: The base station 112 determines a monitoring periodicity of a signal 1. For descriptions of S720, refer to S620.

S730: The base station 112 sends configuration information 1 to the terminal device 120.

Correspondingly, the terminal device 120 receives the configuration information 1 from the base station 112.

The base station 112 may configure the monitoring periodicity of the signal 1 for the terminal device 120 by using an RRC release message (RRC release message) (that is, the configuration information 1 is the RRC release message).

S740: The terminal device 120 determines the monitoring periodicity of the signal 1 based on the configuration information 1. For descriptions of S740, refer to S640.

In conclusion, the base station 112 can determine the monitoring periodicity of the signal 1 based on the switching time 1 and a latency requirement 1 that are reported by the terminal device 120. The terminal device 120 can determine the monitoring periodicity of the signal 1 based on the configuration information 1, and perform a discontinuous monitoring behavior on the signal 1 based on the monitoring periodicity of the signal 1.

In a possible implementation, when the base station 112 does not configure the monitoring periodicity of the signal 1 associated with the terminal device 120, the terminal device 120 may use, by default, a monitoring periodicity that is of the signal 1 and that is configured by a core network device 111 for the terminal device 120, or the terminal device 120 may use, by default, a PO monitoring periodicity configured by the base station 112 for the terminal device 120 or a PO monitoring periodicity configured by the core network device 111 for the terminal device 120, to monitor the signal 1.

It should be noted that the method 700 mainly relates to content of interaction that may be performed between the terminal device 120 and the base station 112 by using the RRC signaling, and the terminal device 120 is in the connected state. In addition, related descriptions of the method 600 are also applicable to the method 700. Details are not described again.

FIG. 8 is a schematic interaction flowchart of a communication method 800 according to an embodiment of this application. The method shown in FIG. 8 is described by using an example in which a network device 110 is a base station 113. The method 800 includes the following steps.

Optionally, in S810a, the base station 113 sends configuration information 2 (for example, second configuration information) to a terminal device 120.

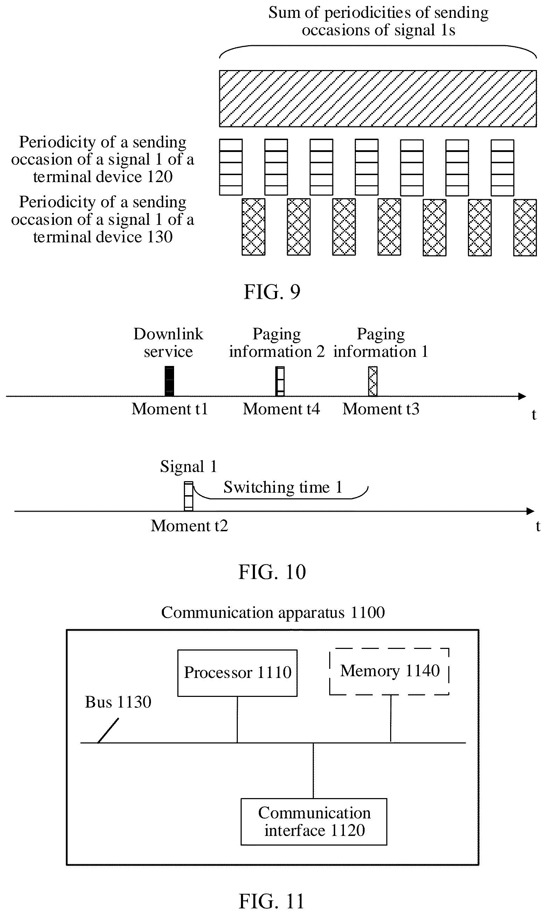

Correspondingly, the terminal device 120 receives the configuration information 2 from the base station 113. The configuration information 2 is used to configure a periodicity of a sending occasion of a signal 1. For details, refer to FIG. 9.

FIG. 9 is a diagram of a periodicity of a sending occasion of a wake-up signal according to an embodiment of this application. When the base station 113 serves a plurality of terminal devices (for example, the terminal device 120 and a terminal device 130), the base station 113 configures a corresponding sending occasion of a wake-up signal for each terminal device. A slash texture in FIG. 9 shows a sum of periodicities of sending occasions of wake-up signals of the plurality of terminal devices. The terminal device 120 corresponds to a periodicity (which is shown by a horizontal texture) of a sending occasion of a first-type wake-up signal, and the terminal device 130 corresponds to a periodicity (which is shown by a cross texture) of a sending occasion of a second-type wake-up signal.

The base station 113 may send, to the terminal device 120, content (including the periodicities of the sending occasions of signal 1s associated with the plurality of terminal devices) shown by the slash texture. The terminal device 120 determines, based on the configuration information 2, whether a monitoring periodicity of the signal 1 satisfies a periodicity of a sending occasion of the signal 1 associated with the terminal device 120, and determines, based on the monitoring periodicity of the signal 1 and the periodicity of the sending occasion of the signal 1 associated with the terminal device 120, whether to monitor the signal 1 or monitor paging information on a PO. In this way, the base station 113 may control frequency of sending the signal 1, to control resource overheads of the signal 1.

S810: The base station 113 determines the monitoring periodicity of the signal 1.

Specifically, the base station 113 may determine the monitoring periodicity of the signal 1 in the following manners.

Manner #1: A core network device 111 or a base station 112 sends the monitoring periodicity of the signal 1 to the base station 113. In this way, the base station 113 may determine a monitoring periodicity 1 of the signal 1 based on an indication of the core network device 111 or the base station 112.

Manner #2: A core network device 111 or a base station 112 sends information 1 to the base station 113, where the information 1 can be used by the base station 113 to determine the monitoring periodicity of the signal 1.

The information 1 may include switching time 1 and a latency requirement 1. Alternatively, the information 1 may include the switching time 1 and a specific discontinuous reception (discontinuous reception, DRX) cycle (UE specific DRX cycle) of the terminal device 120. Alternatively, the information 1 may include a type of the terminal device 120, where the type of the terminal device has an association relationship with switching time and a latency requirement. Paging information sent by the core network device 111 to the base station 113 may carry the switching time 1. The core network device 111 may send the UE specific DRX cycle to the base station 113 by using an existing method.

When the information 1 includes the switching time 1 and the UE specific DRX cycle, the base station 113 may determine the monitoring periodicity of the signal 1 based on the information 1. For example, duration of the UE specific DRX cycle is X ms, the switching time 1 is Y ms, and the monitoring periodicity of the signal 1 may be X-Y ms.

Manner #3: The base station 113 configures one monitoring periodicity of the signal 1. For example, the base station 113 only configures one monitoring periodicity of the signal 1, and the terminal device 120 monitors the signal 1 based on the monitoring periodicity of the signal 1. When determining that the monitoring periodicity of the signal 1 does not satisfy a latency requirement 1 (for example, the monitoring periodicity of the signal 1 is greater than the latency requirement 1), the terminal device 120 may choose not to monitor the signal 1, but monitor the paging information on the PO.

Manner #4: The base station 113 configures a plurality of monitoring periodicities of the signal 1. Different monitoring periodicities of the signal 1 correspond to different types of terminal devices. The terminal device 120 determines a proper monitoring periodicity of the signal 1 based on a type of the terminal device 120. When the terminal device 120 determines that the monitoring periodicity that is of the signal 1 and that is configured by the base station 113 does not satisfy a latency requirement 1, the terminal device 120 may choose not to monitor the signal 1, but monitor the paging information on the PO.

S820: The base station 113 sends the signal 1 to the terminal device 120 based on the monitoring periodicity of the signal 1.

S830: The terminal device 120 monitors the signal 1 based on the monitoring periodicity of the signal 1.

When the terminal device 120 determines that the monitoring periodicity of the signal 1 is greater than or equal to the periodicity of the sending occasion of the signal 1, the terminal device 120 monitors the signal 1 based on the monitoring periodicity of the signal 1. The terminal device 120 may determine the monitoring periodicity of the signal 1 according to the foregoing method, or the base station 113 may send the monitoring periodicity of the signal 1 to the terminal device 120.

In a possible implementation, when the terminal device 120 determines that the monitoring periodicity of the signal 1 is less than the periodicity of the sending occasion of the signal 1 associated with the terminal device 120, the terminal device 120 may determine that monitoring the signal 1 in a current serving cell cannot satisfy a latency requirement of the terminal device 120, and the terminal device 120 may choose not to monitor the signal 1, but monitor the paging information on the PO. That is, to satisfy the latency requirement, the terminal device 120 gives up monitoring the signal 1. For details, refer to the descriptions of the relationship between the periodicity of the sending occasion of the signal 1 and the monitoring periodicity of the signal 1 in FIG. 5.

In conclusion, the terminal device 120 may perform a discontinuous monitoring behavior on the signal 1 based on the monitoring periodicity of the signal 1.

In a possible implementation, the method 800 may further include the following step.

S810b: The base station 113 sends, to the terminal device 120, at least one of the following: monitoring duration of the signal 1 and a monitoring offset of the signal 1.

The base station 113 may send, to the terminal device 120 by using a system information block (system information block, SIB), at least one of the following: the monitoring duration of the signal 1 and the monitoring offset of the signal 1. The core network device 111/base station 112 may determine the monitoring duration of the signal 1 and the monitoring offset of the signal 1, and send the monitoring duration and the monitoring offset of the signal 1 to the base station 113. Alternatively, the monitoring duration of the signal 1 and the monitoring offset of the signal 1 are determined by the base station 113. Specifically, the base station 113 determines the monitoring offset of the signal 1 by using a paging ID of the terminal device. It is assumed that the paging ID of the terminal device 120 is a UE ID, a total quantity of sending occasions of the signal 1 in one periodicity is N, and the monitoring offset of the signal 1 associated with the terminal device 120 is UE ID mod N.

In a possible implementation, the method 800 may further include the following step.

S810c: The base station 113 sends paging information 1 to the terminal device 120.

Correspondingly, the terminal device 120 receives the paging information 1 from the base station 113. Duration between sending time of the paging information 1 and sending time of the signal 1 is greater than or equal to the switching time 1. For details, refer to FIG. 10.

FIG. 10 is a diagram of sending time of paging information according to an embodiment of this application. As shown in FIG. 10, a downlink service (which is shown by a black block in FIG. 10) arrives at the base station 113 at a moment t1, the base station 113 sends the signal 1 (which is shown by a block with a horizontal texture in FIG. 10) to the terminal device 120 at a moment t2, and sends the paging information 1 (which is shown by a block with a cross texture in FIG. 10) to the terminal device 120 at a moment t3. Duration between the moment t3 and the moment t2 is greater than or equal to the switching time 1. In this way, the terminal device 120 can receive the paging information 1 as soon as possible after switching from a wake-up link to a main link. A PO corresponding to the moment t3 may be a periodic PO, to be specific, a PO position determined based on a periodicity of a PO and a PO offset that correspond to the terminal device 120. Alternatively, a PO corresponding to the moment t3 may be a dynamic PO, to be specific, a PO position determined based on the moment t2 (in other words, a sending time position of the signal 1) and the switching time 1.

Alternatively, the base station 113 may send (which is optional) paging information 2 (which is shown by a block with a criss-cross texture in FIG. 10) to the terminal device 120 at a moment t4, and the paging information 2 is earlier than the paging information 1. When the terminal device 120 does not monitor the signal 1 (for example, the monitoring periodicity of the signal 1 is less than the periodicity of the sending occasion of the signal 1), the terminal device 120 may receive the paging information 2 as soon as possible.

In the method 800, content that the base station 113 determines the monitoring periodicity of the signal 1 based on the switching time 1 and the latency requirement 1 is also applicable to the terminal device 120. To be specific, the terminal device 120 determines the monitoring periodicity of the signal 1 based on the switching time 1 and the latency requirement 1 (for the terminal device 120, these two parameters are known). In the method 800, content that the base station 113 determines the monitoring periodicity of the signal 1 based on the type of the terminal device is also applicable to the terminal device 120. To be specific, the terminal device 120 determines the monitoring periodicity of the signal 1 based on the type of the terminal device 120 (for the terminal device 120, the parameter is known).

In addition, an execution sequence of S810a to S810c is not limited in this application.

In embodiments of this application, the method 600 to the method 800 may be combined to form a new technical solution. For example, the core network device 111 sends the configuration information 1 to the terminal device 120 (for example, the method 600), and the base station 113 sends the paging information to the terminal device 120 (for example, the method 800). This is not limited in this application. When the terminal device 120 interacts with the base station 113, and also interacts with the core network device 111/base station 112, in this application, the core network device 111/base station 112 can be referred to as a first network device, and the base station 113 can be referred to as a second network device.

Finally, apparatus embodiments in embodiments of this application are described.

To implement functions in the methods provided in this application, both a terminal device 120 and a network device 110 may include a hardware structure and/or a software module, and implement the foregoing functions in a form of the hardware structure, the software module, or combination of the hardware structure and the software module. Whether a function in the foregoing functions is performed by using the hardware structure, the software module, or the combination of the hardware structure and the software module depends on particular application and design constraints of the technical solutions.

FIG. 11 is a block diagram of a communication apparatus 1100 according to an embodiment of this application. The communication apparatus 1100 includes a processor 1110 and a communication interface 1120. The processor 1110 and the communication interface 1120 may be connected to each other through a bus 1130. The communication apparatus 1100 may be the network device 110, or may be the terminal device 120.

Optionally, the communication apparatus 1100 may further include a memory 1140. The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is configured for related instructions and data.

The processor 1110 may be one or more central processing units (central processing units, CPUs). When the processor 1110 is one CPU, the CPU may be a single-core CPU or a multicore CPU.

When the communication apparatus 1100 is the terminal device 120, for example, the processor 1110 is configured to perform the following operations: receiving configuration information 1 from the network device 110, and determining a monitoring periodicity of a signal 1 based on the configuration information 1.

When the communication apparatus 1100 is the network device 110, for example, the processor 1110 is configured to perform the following operation: sending the configuration information 1 and the like to the terminal device 120.

The foregoing content is merely used as an example for description. When the communication apparatus 1100 is the network device 110/terminal device 120, the communication apparatus 1100 is responsible for performing the methods or steps related to the network device 110/terminal device 120 in the foregoing method embodiments.

The foregoing descriptions are merely examples for description. For specific content, refer to the content shown in the foregoing method embodiments. For implementation of each operation in FIG. 11, refer to corresponding descriptions of the method embodiments shown in FIG. 5 to FIG. 10.

It should be noted that the processor or the like shown in the communication apparatus 1100 may be used as an internal structure of a first module of the terminal device 120, or may be used as an internal structure of a second module of the terminal device 120.

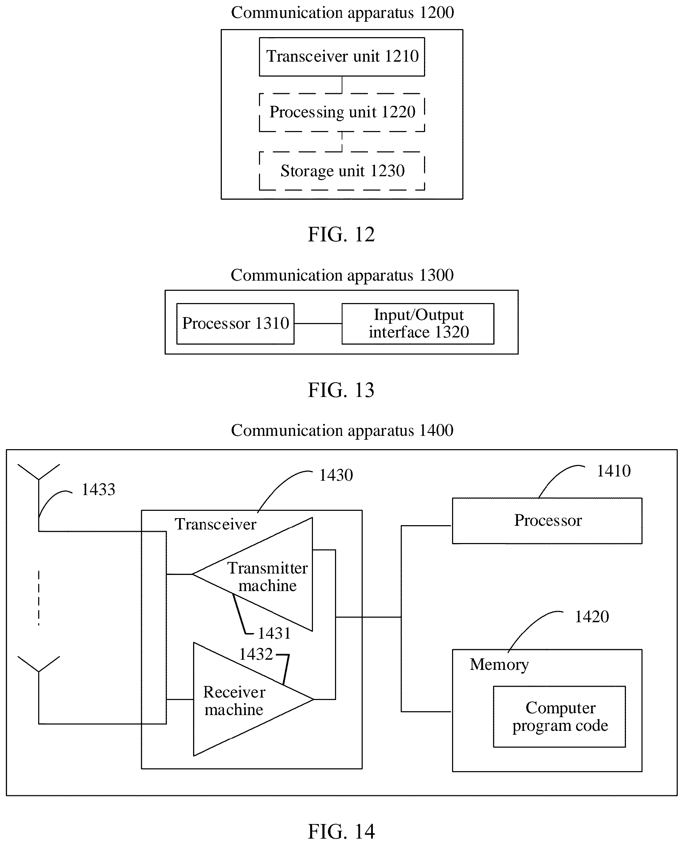

FIG. 12 is a block diagram of a communication apparatus 1200 according to an embodiment of this application. The communication apparatus 1200 may be the network device 110 or the terminal device 120, or may be a chip or a module in the network device 110 or the terminal device 120, and is configured to implement the methods in the foregoing embodiments. The communication apparatus 1200 includes a transceiver unit 1210. The following describes the transceiver unit 1210 by using an example.

The transceiver unit 1210 may include a sending unit and a receiving unit. The sending unit is configured to execute a sending action of the communication apparatus, and the receiving unit is configured to execute a receiving action of the communication apparatus. For ease of description, in this embodiment of this application, the sending unit and the receiving unit are combined into one transceiver unit. This is described herein once for all, and details are not described below again.

When the communication apparatus 1200 is the terminal device 120, for example, the transceiver unit 1210 is configured to receive configuration information 1 from the network device 110.

Optionally, the communication apparatus 1200 may further include a processing unit 1220, configured to perform content related to steps of processing, coordination, and the like of the terminal device 120. For example, the processing unit 1220 is configured to determine a monitoring periodicity of a signal 1 based on the configuration information 1.

When the communication apparatus 1200 is the network device 110, for example, the transceiver unit 1210 is configured to send the configuration information 1 to the terminal device.

Optionally, the communication apparatus 1200 may further include the processing unit 1220, configured to perform content related to steps of processing, coordination, and the like of the network device 110. For example, the processing unit 1220 is configured to determine the monitoring periodicity of the signal 1, and the like.

The foregoing content is merely used as an example for description. When the communication apparatus 1200 is the network device 110/terminal device 120, the communication apparatus 1200 is responsible for performing the methods or steps related to the network device 110/terminal device 120 in the foregoing method embodiments.

Optionally, the communication apparatus 1200 further includes a storage unit 1230, and the storage unit 1230 is configured to store a program or code used to perform the foregoing methods.

It should be noted that the transceiver unit or the like shown in the communication apparatus 1200 may be used as an internal structure of a first module of the terminal device 120, or may be used as an internal structure of a second module of the terminal device 120.

The apparatus embodiments shown in FIG. 11 and FIG. 12 are used to implement the content described in FIG. 5 to FIG. 10. For specific execution steps and methods of the apparatuses shown in FIG. 11 and FIG. 12, refer to the content described in the foregoing method embodiments.

FIG. 13 is a block diagram of a communication apparatus 1300 according to an embodiment of this application. The communication apparatus 1300 is configured to implement functions of a network device 110/terminal device 120. The communication apparatus 1300 may be a chip in the network device 110/terminal device 120.

The communication apparatus 1300 includes an input/output interface 1320 and a processor 1310. The input/output interface 1320 may be an input/output circuit. The processor 1310 may be a signal processor, a chip, or another integrated circuit that can implement the methods in this application. The input/output interface 1320 is configured to input or output a signal or data.

For example, when the communication apparatus 1300 is the terminal device 120, the input/output interface 1320 is configured to receive configuration information 1 from the network device 110. The processor 1310 is configured to determine a monitoring periodicity of a signal 1 based on the configuration information 1. The processor 1310 is further configured to perform a part or all of steps of any method provided in this application.

For example, the communication apparatus 1300 is the network device 110, and the input/output interface 1320 is configured to send the configuration information 1 to the terminal device 120. The processor 1310 is configured to perform a part or all of steps of any method provided in this application.

In a possible implementation, the processor 1310 executes instructions stored in a memory, to implement the functions implemented by the network device or the terminal device.

Optionally, the communication apparatus 1300 further includes the memory.

Optionally, the processor and the memory are integrated together.

Optionally, the memory is arranged outside the communication apparatus 1300.

In a possible implementation, the processor 1310 may be a logic circuit, and the processor 1310 inputs/outputs a message or signaling through the input/output interface 1320. The logic circuit may be a signal processor, a chip, or another integrated circuit that can implement the methods in embodiments of this application.

The foregoing descriptions of the communication apparatus 1300 are merely examples for description. The communication apparatus 1300 can be configured to perform the methods in the foregoing embodiments. For specific content, refer to the descriptions of the foregoing method embodiments. Details are not described herein again.

It should be noted that the processor or the like shown in the communication apparatus 1300 may be used as an internal structure of a first module of the terminal device 120, or may be used as an internal structure of a second module of the terminal device 120.

FIG. 14 is a block diagram of a communication apparatus 1400 according to an embodiment of this application. The communication apparatus 1400 may be the network device 110 or may be a chip. The communication apparatus 1400 may be configured to perform operations performed by the network device 110 in the method embodiments shown in FIG. 5 to FIG. 10.

When the communication apparatus 1400 is the network device 110, for example, a base station, FIG. 14 is a simplified diagram of a structure of the base station. The base station includes a module 1410, a module 1420, and a module 1430. The module 1410 is mainly configured to: perform baseband processing, control the base station, and the like. The module 1410 is usually a control center of the base station, may be usually referred to as a processor, and is configured to control the base station to perform processing operations on a network device side in the foregoing method embodiments. The module 1420 is mainly configured to store computer program code and data. The module 1430 is mainly configured to: receive or send a radio frequency signal, and perform conversion between the radio frequency signal and a baseband signal. The module 1430 may be usually referred to as a transceiver module, a transceiver machine, a transceiver circuit, a transceiver, or the like. The transceiver module of the module 1430 may also be referred to as a transceiver machine, a transceiver, or the like, and includes an antenna 1433 and a radio frequency circuit (which is not shown in FIG. 14). The radio frequency circuit is mainly configured to perform radio frequency processing. Optionally, in the module 1430, a component configured to implement a receiving function may be considered as a receiver machine, and a component configured to implement a sending function may be considered as a transmitter machine. In other words, the module 1430 includes a receiver machine 1432 and a transmitter machine 1431. The receiver machine may also be referred to as a receiving module, a receiver, a receiver circuit, or the like, and the transmitter machine may be referred to as a transmitting module, a transmitter, a transmitter circuit, or the like.

The module 1410 and the module 1420 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards share one or more processors at the same time.

For example, in an implementation, the transceiver module of the module 1430 is configured to perform a receiving/sending-related process performed by a network device in the embodiments shown in FIG. 5 to FIG. 10. The processor of the module 1410 is configured to perform a processing-related process performed by a network device 110 in the embodiments shown in FIG. 5 to FIG. 10.

In another implementation, the processor of the module 1410 is configured to perform a processing-related process performed by a communication device in the embodiments shown in FIG. 5 to FIG. 10.

In another implementation, the transceiver module of the module 1430 is configured to perform a receiving/sending-related process performed by a communication device in the embodiments shown in FIG. 5 to FIG. 10.

It should be understood that FIG. 14 is merely an example rather than a limitation, and the foregoing network device 110 including the processor, the memory, and the transceiver may not depend on the structures shown in FIG. 11 to FIG. 13.

When the communication apparatus 1400 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

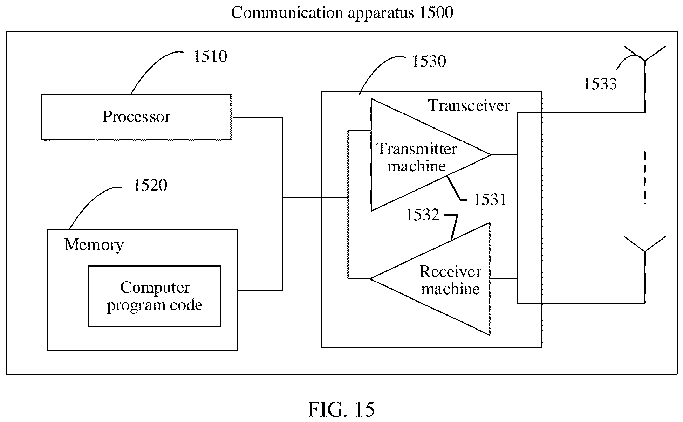

FIG. 15 is a block diagram of a communication apparatus 1500 according to an embodiment of this application. The communication apparatus 1500 may be a terminal device 120, a processor or a chip of the terminal device 120. The communication apparatus 1500 may be configured to perform operations performed by the terminal device 120 or a communication device in the foregoing method embodiments.

When the communication apparatus 1500 is the terminal device 120, FIG. 15 is a simplified diagram of a structure of the terminal device. As shown in FIG. 15, the terminal device includes a processor, a memory, and a transceiver. The memory may store computer program code. The transceiver includes a transmitter machine 1531, a receiver machine 1532, a radio frequency circuit (which is not shown in FIG. 15), an antenna 1533, and an input/output apparatus (which is not shown in FIG. 15).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When there is data needs to be sent, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When there is data sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 15 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 15, the terminal device includes a processor 1510, a memory 1520, and a transceiver 1530. The processor 1510 may also be referred to as a processing unit, a processing board, a processing module, a processing apparatus, or the like. The transceiver 1530 may also be referred to as a transceiver unit, a transceiver machine, a transceiver apparatus, or the like.

Optionally, in the transceiver 1530, a component configured to implement a receiving function may be considered as a receiving module, and a component configured to implement a sending function may be considered as a sending module. That is, the transceiver 1530 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1510 is configured to perform a processing action on a terminal device 120 side in the embodiments shown in FIG. 5 to FIG. 10, and the transceiver 1530 is configured to perform transmit and receive actions on the terminal device 120 side in FIG. 5 to FIG. 10.

For example, in an implementation, the processor 1510 is configured to perform the processing action on the terminal device 120 side in the embodiments shown in FIG. 5 to FIG. 10, and the transceiver 1530 is configured to perform the transmit and receive actions on the terminal device 120 side in FIG. 5 to FIG. 10.

It should be understood that FIG. 15 is merely an example rather than a limitation. The terminal device including the transceiver module and the processing module may not depend on the structures shown in FIG. 11 to FIG. 13.

When the communication apparatus 1500 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip. The chip includes a processor, configured to invoke instructions from a memory and run the instructions stored in the memory, so that a communication device on which the chip is installed is enabled to perform the methods in the foregoing examples.

This application further provides another chip. The chip includes an input interface, an output interface, and a processor. The input interface, the output interface, and the processor are connected through an internal connection path. The processor is configured to execute code in a memory; and when the code is executed, the processor is configured to perform the methods in the foregoing examples. Optionally, the chip further includes the memory, and the memory is configured to store a computer program or the code.

This application further provides a processor, configured to be coupled to a memory, and configured to perform the methods and the functions of the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiment are implemented.

Another embodiment of this application provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in other manners. For example, the described apparatus embodiment is merely an example. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving, by a terminal device, first configuration information from a first network device, wherein the first configuration information is used to configure a monitoring periodicity of a first signal; and
determining, by the terminal device, the monitoring periodicity of the first signal based on the first configuration information, wherein the first signal is used to wake up the terminal device.

2. A communication method, comprising:
determining, by a terminal device, switching time of the terminal device and a latency requirement of the terminal device, wherein
the switching time is duration between receiving a first signal by the terminal device and being capable of receiving paging information by the terminal device, or the switching time is duration between receiving the first signal by the terminal device and being capable of initiating access by the terminal device; and
determining, by the terminal device, a monitoring periodicity of the first signal based on the switching time and the latency requirement, wherein the first signal is used to wake up the terminal device.

3. The method according to claim 1 or 2, wherein the method further comprises:
monitoring, by the terminal device, the first signal based on the monitoring periodicity of the first signal.

4. The method according to claim 1 or 2, wherein the method further comprises:
receiving, by the terminal device, second configuration information from a second network device, wherein the second configuration information is used to configure a periodicity of a sending occasion of the first signal.

5. The method according to claim 4, wherein the method further comprises:
monitoring, by the terminal device, first paging information on a paging occasion, wherein
the periodicity of the sending occasion of the first signal is greater than the monitoring periodicity of the first signal.

6. The method according to any one of claims 1 to 5, wherein the method further comprises:
sending, by the terminal device, the switching time of the terminal device to the first network device.

7. The method according to any one of claims 1 to 6, wherein the monitoring periodicity of the first signal belongs to a monitoring periodicity set, and the monitoring periodicity set is a predefined set.

8. The method according to claim 7, wherein any two monitoring periodicities in the monitoring periodicity set satisfy an integer multiple relationship.

9. A communication method, comprising:
receiving, by a second network device, a monitoring periodicity of a first signal from a first network device; and
sending, by the second network device, the first signal to a terminal device based on the monitoring periodicity of the first signal, wherein the first signal is used to wake up the terminal device; and
the second network device comprises a base station corresponding to a current serving cell of the terminal device, and the first network device comprises a core network device or a base station corresponding to a last serving cell of the terminal device.

10. A communication method, comprising:
receiving, by a second network device, first information from a first network device, wherein
the first information comprises switching time of a terminal device and a latency requirement of the terminal device, the first information comprises the switching time of the terminal device and a specific discontinuous reception cycle of the terminal device, or the first information comprises a type of the terminal device, wherein the type of the terminal device has an association relationship with switching time and a latency requirement; and
determining, by the second network device, a monitoring periodicity of a first signal based on the first information, wherein the first signal is used to wake up the terminal device;
the switching time is duration between receiving the first signal by the terminal device and being capable of receiving paging information by the terminal device, or the switching time is duration between receiving the first signal by the terminal device and being capable of initiating access by the terminal device; and
the second network device comprises a base station corresponding to a current serving cell of the terminal device, and the first network device comprises a core network device or a base station corresponding to a last serving cell of the terminal device.

11. The method according to claim 9 or 10, wherein the method further comprises:
sending, by the second network device, the monitoring periodicity of the first signal to the terminal device.

12. The method according to any one of claims 9 to 11, wherein the method further comprises:
sending, by the second network device, configuration information to the terminal device, wherein the configuration information is used to configure a periodicity of a sending occasion of the first signal.

13. The method according to claim 12, wherein the method further comprises:
sending, by the second network device, second paging information to the terminal device, wherein a time interval between sending time of the second paging information and sending time of the first signal is greater than or equal to the switching time.

14. The method according to claim 13, wherein the method further comprises:
sending, by the second network device, first paging information to the terminal device on a paging occasion, wherein the first paging information is earlier than the second paging information; and
the periodicity of the sending occasion of the first signal is greater than the monitoring periodicity of the first signal.

15. The method according to any one of claims 9 to 14, wherein the monitoring periodicity of the first signal belongs to a monitoring periodicity set, and the monitoring periodicity set is a predefined set.

16. The method according to claim 15, wherein any two monitoring periodicities in the monitoring periodicity set satisfy an integer multiple relationship.

17. A communication method, comprising:
determining, by a first network device, a monitoring periodicity of a first signal, wherein the first signal is used to wake up a terminal device; and
sending, by the first network device, the monitoring periodicity of the first signal to at least one of the terminal device and a second network device, wherein
the second network device comprises a base station corresponding to a current serving cell of the terminal device, and the first network device comprises a core network device or a base station corresponding to a last serving cell of the terminal device.

18. The method according to claim 17, wherein the method further comprises:
receiving, by the first network device, switching time from the terminal device, wherein
the switching time is duration between receiving the first signal by the terminal device and being capable of receiving paging information by the terminal device, or the switching time is duration between receiving the first signal by the terminal device and being capable of initiating access by the terminal device.

19. The method according to claim 17 or 18, wherein a value of the monitoring periodicity of the first signal belongs to a monitoring periodicity value set, and the monitoring periodicity value set is a predefined value set.

20. The method according to claim 19, wherein any two monitoring periodicities in the monitoring periodicity set satisfy an integer multiple relationship.

21. A communication apparatus, comprising a processor, wherein the processor is configured to: execute a computer program or instructions, or use a logic circuit to:
enable the communication apparatus to perform the method according to any one of claims 1 to 8;
enable the communication apparatus to perform the method according to any one of claims 9 to 16; or
enable the communication apparatus to perform the method according to any one of claims 17 to 20.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input and/or output a signal.

24. A communication apparatus, comprising a logic circuit and an input/output interface, wherein the input/output interface is configured to input and/or output a signal; and
the logic circuit is configured to perform the method according to any one of claims 1 to 8;
the logic circuit is configured to perform the method according to any one of claims 9 to 16; or
the logic circuit is configured to perform the method according to any one of claims 17 to 20.

25. A computer-readable storage medium, wherein the computer-readable storage medium stores a computer program or instructions; and when the computer program or the instructions are run on a computer,
the method according to any one of claims 1 to 8 is performed;
the method according to any one of claims 9 to 16 is performed; or
the method according to any one of claims 17 to 20 is performed.

26. A computer program product, comprising instructions, wherein when the instructions are run on a computer,
the method according to any one of claims 1 to 8 is performed;
the method according to any one of claims 9 to 16 is performed; or
the method according to any one of claims 17 to 20 is performed.

27. A communication system, comprising:
a terminal device, configured to perform the method according to any one of claims 1 to 8; and
a first network device, configured to perform the method according to any one of claims 17 to 20.

28. The communication system according to claim 28, wherein the communication system further comprises:
a second network device, configured to perform the method according to any one of claims 9 to 16.
